# EUROPEAN PATENT SPECIFICATION

(11) **EP 3 746 663 B1**
(45) Date of publication and mention of the grant of the patent: **09.03.2022**
(21) Application number: 19714848.9
(22) Date of filing: 28.01.2019
(51) Int. Cl.: F15B 15/14, B23K 20/12, B62D 33/067

(54) **PISTON AND PISTON ROD ASSEMBLY MANUFACTURING METHOD**
VERFAHREN ZUR HERSTELLUNG EINES KOLBENS UND EINER KOLBENSTANGENANORDNUNG
PROCÉDÉ DE FABRICATION D'ENSEMBLE PISTON ET TIGE DE PISTON

(30) Priority: 29.01.2018 NL 2020336
(43) Date of publication of application: 09.12.2020
(73) Proprietor: Power Packer North America, Inc., Westfield WI 53964 (US)
(72) Inventor: NIEUWENHUIS, Marcel Gerardus Maria, 7544 SC Enschede (NL)
(74) Representative: EP&C
(86) International application number: PCT/NL2019/050047
(87) International publication number: WO 2019/147133

(56) References cited:
- EP-A1- 2 949 417
- US-A- 3 596 570
- US-A1- 2016 159 377

## Description

The present invention relates to a method for manufacturing a piston and piston rod assembly, a piston and piston rod assembly, a linear actuator, a cab tilting system and a vehicle.

EP2.949.417 discloses a method for producing a piston and piston rod assembly by joining end surfaces of a piston rod and a rod head to each other by friction welding. The piston rod has a distal rod end which is adapted to connect the rod head. Both the piston rod and the rod head have flat annular end surfaces. Hollow portions are provided at the end surfaces to reduce a joining area in comparison with a case in which end surfaces are not recessed. Due to the hollow portions, a size of an equipment for the friction welding can be reduced. The friction welding causes a base material of the end surfaces to be discharged to the outer and inner circumferential sides of the joining area. A plastic flow of base material occurs during friction welding and finally an outer and inner circumferential bead remain at a joint area. The outer bead can be removed from the outer circumferential side by a successive cutting operation. The inner bead on the inner circumferential side is enclosed and maintained. The piston rod has a large-diameter portion over its length. At a proximal rod end, the piston rod has a small-diameter portion to which an annular piston is to be linked. A step portion is provided on a boundary between the small-diameter portion and large-diameter portion. The piston can be anchored against the step portion by a nut that is fastened to a male screw portion of the small-diameter portion.

US3.596.570 discloses a hydraulic actuator which is entirely assembled by means of a plurality of friction welds. The construction permits the elimination of many parts formerly necessary in such actuators, reduces, the possibility of fluid leakage, and reduces the overall length of the actuator as compared with other actuators having the same length of stroke. A piston rod is welded directly to a piston head. The piston head has an end face which is provided with a groove or a counter bore for receiving and end of the piston rod. The groove forms a flash trap to prevent flash material from the weld from protruding beyond the end face of the piston head.

US2016/159377 discloses a brake piston assembly. The brake cylinder piston assembly has a composite piston head with a bore formed therethrough, a cup positioned in the bore and coupled to the piston head, and a hollow rod securely welded to the cup. The cup may be coupled to the hollow rod by friction welding to provide a strong, water-tight assembly. The piston assembly is assembled by aligning the bore of piston head with the outer diameter of the cup and then pressing the two elements together axially until a shoulder of the bore of the piston head engages a shoulder of the cup and locking fingers engage a rim of the cup so that locking tabs on the ends of fingers securely grasp the rim of the cup.

it is commonly known to produce a piston and piston rod assembly for a linear actuator by first welding a rod head to a piston rod and by subsequently mounting a piston to the piston rod. In one of the production steps, before mounting the piston to the piston rod, a seal assembly is placed around the large-diameter portion. The seal assembly is arranged for sealing the piston and piston rod assembly with respect to a cylinder housing of the linear actuator. A reason for first welding the rod head and thereafter placing the seal assembly and finally mounting the piston is to prevent contaminations or damages to the seal assembly or piston during production. A welding of the rod head followed by a finishing operation, like cutting, to remove an outer weld bead causes a release of particles. To prevent a contamination or damage to the seal assembly or the piston by these particles, such welding operations followed by a finishing operation always need to be carried out first. Due to the necessary placement of the seal assembly in between the rod head and piston, it is impossible to also weld the piston to the piston rod in a clean manner.

The general object of the present invention is to at least partially eliminate the above mentioned drawbacks and/or to provide a usable alternative. More specific, it is an object of the invention to provide a method for manufacturing a piston and piston rod assembly wherein both a rod head and a piston can be welded to the piston rod. More specific, it is an object of the invention to provide a piston and piston rod assembly and a method for manufacturing such a piston and piston rod assembly, wherein both a rod head and the piston are welded to the piston rod.

According to the invention, this object is achieved by method for manufacturing a piston and piston rod assembly according to claim 1.

The piston and piston rod assembly is manufactured as a subassembly to assemble a linear actuator, in particular a fluid powered linear actuator, more in particular a hydraulic cylinder actuator. By carrying out the method, the piston is connected to the piston rod.

The method comprises a step of connecting the piston to the piston rod.

The piston rod is an elongated piston rod. The elongated piston rod defines an axial axis. The piston rod has a proximal rod end and a distal rod end. The proximal rod end may also be called an inner rod end as the proximal rod end is to be placed inside a housing of the linear actuator. The distal rod end may also be called an outer rod end as the distal rod end is situated outside the housing of the linear actuator.

The piston rod comprises a flash portion which is formed by a narrowed portion at the proximal rod end. The piston rod comprises a flash surface formed by an end face at the proximal rod end of the piston rod.

The piston comprises a flash chamber which is formed by a centrally positioned recess in an end face of the piston. Said recess has a recess bottom forming chamber bottom and a recess inner circumferential wall forming a chamber wall.

The method according to the invention comprises at least a step of inserting the flash portion into the flash chamber, such that the flash surface contacts the chamber bottom and a step of friction welding the piston rod to the piston by causing a relative rotation and an axial pressure in between the flash surface of the piston rod and chamber bottom of the piston such that the flash surface joins to the chamber bottom.

Advantageously, the method according to the invention includes a clean welding step provided by the step of friction welding which step allows a prior placement of a seal assembly around the piston rod. The seal assembly including a wiper, seal ring and a gland can be placed around the piston rod before the clean welding step is carried out.

A joint area is formed in between the flash surface and the chamber bottom inside the flash chamber. During friction welding, base material is flowing and a weld bead is formed around the flash portion at the chamber bottom. The chamber wall circumvents the joint area and surrounds the formed weld bead. Herewith, the weld bead is shielded from the outside by the chamber wall. The joint area and weld bead are positioned in a protected way in a substantially unaccessible manner from the outside. Mechanical impacts or other external influences can hardly impair the welded joint inside the flash chamber.

Advantageously, the method according to the invention allows a manufacturing of a piston and piston rod assembly in which both the proximal and the distal rod end are welded to respectively a piston and a rod head. The rod head can be welded first to the piston rod by friction welding or by another welding method, e.g. in which a weld material is added. If necessary, a cutting, corrosive treatment and/or cleaning operation can be carried out afterwards to remove any weld residuals from the rod head. Subsequently the seal assembly is placed around the piston rod and thereafter the piston is welded by friction welding in a manner described above to fixate the piston to the piston rod. As the welding of the rod head and if necessary a post-welding operational step is carried out before placement of the seal assembly and since the welding of the piston to the piston rod is a clean welding step, damages or contaminations to the assembled piston and piston rod can be strongly reduced. The seal assembly may remain clean and undamaged during the friction welding step to fixate the piston. Performing the friction welding step according to the invention after placement of the seal assembly to fixate the piston to the piston rod may advantageously prevent any degradation of the seal assembly.

In an embodiment of the method according to the invention, the method comprises a step of fixating a rod head to the distal rod end of the piston rod and placing at least one seal assembly, in particular a subassembly of a wiper, seal ring and a gland, around the piston rod before carrying out the steps of inserting the flash portion into the flash chamber, such that the flash surface contacts the chamber bottom and of friction welding the piston rod to the piston by exerting a relative rotation and an axial pressure between the piston rod and the piston such that the flash surface joins to the chamber bottom.

Preferably, the rod head is fixated by welding, in particular by friction welding, to the distal rod end of the piston rod. Process residuals can be removed or another post-connecting step can be carried out after fixating the rod head to the distal rod end and before placement of the seal assembly. Herewith, the sequence of the steps of the method may prevent any contamination or damage to the assembled piston and piston rod assembly.

It is remarked that in this embodiment of the method according to the invention, instead of the rod head -as seen in the prior art provided by EP2.949.417 - , the piston is welded by the step of friction welding to the piston rod. The flash chamber at the piston receives the flash portion of the piston rod, such that the joint area and weld bead are situated at a position protected by the chamber wall. In an embodiment, a gap may remain present in between the piston and piston rod and as such said joint area and weld bead may remain exposed to an environment around the piston. In an assembled linear actuator, the piston is situated inside a cylinder housing. The cylinder housing provides a protected environment. In particular, the piston is situated in an environment of hydraulic liquid which provides a protected environment against corrosion. Herewith, contrary to the rod head, the piston is situated in an environment which is hardly or not at all vulnerable to corrosion. For that reason, a welded joint provided by friction welding without any successive operational steps which could cause damages or contaminations to a placed sealing element is positioned in between the piston and piston rod instead of in between the rod head and piston rod. As the piston is positioned in a protected environment, it is no issue that the welded joint may be exposed to its surroundings.

In a further embodiment of the method according to the invention, during the steps of friction welding, the piston is rotated relative to the piston rod while the piston rod is kept stationary. The seal assembly is placed around the piston rod and since the piston rod is not rotating is also kept stationary during the step of friction welding. Advantageously, keeping the seal assembly stationary may prevent damage to the seal assembly.

In an embodiment of the method according to the invention, the rod head is fixated to the distal rod end by welding, in particular by friction welding. Advantageously, an assembly of a piston and piston rod may be obtained which includes both a welded rod head and a welded piston. A welded connection at both sides of the piston and piston rod assembly may contribute to a mechanical strength of the piston rod. Advantageously, the piston and piston rod assembly may be suitable to be applied in heavy duty circumstances. A heavy duty hydraulic cylinder may include the piston and piston rod assembly according to the invention.

In an embodiment of the method according to the invention, the piston rod comprises a centring portion positioned aside the flash portion. The centring portion serves to centre the piston with respect to the piston rod. Advantageously, the centring portion contributes to an accuracy of an alignment of the piston and piston rod. Additionally, the centring portion may be received in the flash chamber, and may close off the flash chamber in an axial direction. Further, the invention relates to a piston and piston rod assembly for a linear actuator. The piston and piston rod assembly is an assembly in which the piston is connected to the piston rod. In another way of notation, the 'piston and piston rod assembly' may be denoted as 'piston / piston rod assembly' or 'piston - piston rod assembly' which means the same.

According to the invention, a piston and piston rod assembly for a linear actuator according to claim 6 is provided, wherein the piston is connected by friction welding to the piston rod.

The piston and piston rod assembly comprises a piston for subdividing an inner space of a cylinder housing of the linear actuator into a pull and push chamber. The piston comprises a flash chamber which is formed by a centrally positioned recess at an end face of the piston.

Said recess has a recess bottom forming a chamber bottom and a recess inner circumferential wall forming a chamber wall.

The piston and piston rod assembly further comprises an elongated piston rod having a proximal rod end and a distal rod end. Preferably, the piston rod is solid in which the piston rod is a massive shaft. The piston rod comprises a flash portion at the proximal rod end. The flash portion is formed by a narrowed portion. The flash portion has a smaller diameter than a main diameter of the piston rod. Preferably, the main diameter of the piston rod is an outer diameter of at most 20 millimetres which increases a stability of the method. The flash portion has a flash surface formed by an end face of the piston rod. Preferably, the flash portion has a smooth outer circumferential surface.

The flash chamber is adapted to receive the flash portion of the piston rod, such that the flash surface abuts to the chamber bottom.

Such a piston and piston rod assembly is a product obtainable by the method according to the invention.

A joint area is provided at the chamfer bottom of the piston. The joint area is surrounded by the chamfer wall, such that the joint area is shielded from the outside. Bursts of a flow of material during friction welding may be situated at an outer circumference of the welded flash portion and are laterally shielded from the outside by the chamfer wall.

Seen in an axial direction, a gap may be present and formed in between the end face of the piston and an annular end face of the piston rod. The gap provides an open communication to the outside. However, in an assembled linear actuator, the piston will be situated inside a cylinder housing which provides a protected environment. In particular, the piston is surrounded by a hydraulic liquid, such that the joint area is further protected against corrosion. In contrast to the piston, the rod head is situated outside the cylinder housing in a more corrosive environment. For that reason, the clean processed but open welded joint obtained by the friction welding is carried out to the piston and not to rod head.

In an embodiment of the piston and piston rod assembly according to the invention, the flash portion has a flash portion length 'fpl' and the flash chamber has a flash chamber depth 'chd', wherein the flash portion length is at most 2mm larger than the chamber depth. Advantageously, a gap in between the end face of the piston and an annular end face in between the first portion and a remaining part of the piston rod is limited to at most 2 mm, preferably at most 1 mm, which contributes to a reduction of a possible contamination originating from the flash chamber. Bursts during the step of friction welding are enclosed by the flash chamber and resisted by the gap.

In an embodiment of the piston and piston rod assembly according to the invention, the piston rod comprises a centring portion for centring the piston with respect to the piston rod. The centring portion is positioned aside the flash portion. In particular, the centring portion is positioned adjacent the flash portion. The centring portion has an outer diameter which is larger than an outer diameter of the flash portion, but smaller than the main diameter of the piston rod. The centring portion contributes to a proper alignment of the piston with respect to the piston rod. In addition, the centring portion may close off the flash chamber which may eliminate an escape of weld residuals during a step of friction welding.

In an embodiment of the piston and piston rod assembly according to the invention, the piston is made of a steel material. Preferably, both the piston rod and the piston are out of a steel material. Advantageously, steel material may contribute to a proper welding process. Further, such piston and piston rod assembly made of steel may comply to technical requirements provided for heavy duty circumstances in which a heavy load is to be operated, e.g. like in a cab tilting system.

In an embodiment of the piston and piston rod assembly according to the invention, the piston and piston rod assembly further comprises a rod head which is welded at the distal rod end of the piston rod. The rod head is adapted to mount the piston and piston rod assembly to an operable component, e.g. a cabin of a truck vehicle. Further, the piston and piston rod assembly comprises a seal assembly which is slidably mounted around the piston rod.

Further, the invention relates to a linear actuator, in particular a hydraulic linear actuator. The linear actuator comprises a cylinder housing including an inner space and a piston and piston rod assembly according to the invention as described above.

Further, the invention relates to a cab tilting system comprising a tilt cylinder formed by a hydraulic linear actuator according to the invention. Cab tilting systems are known from the art. Such a cab tilting system comprises an assembly of a pump, a reservoir and a control valve which are adapted to operate the tilt cylinder for raising a cabin of a vehicle with respect to a chassis.

Further, the invention relates to a vehicle, in particular a truck vehicle, which comprises a cab tilting system according to the invention.

The invention will be explained in more detail with reference to the appended drawings. The drawings show a practical embodiment according to the invention, which may not be interpreted as limiting the scope of the invention. Specific features may also be considered apart from the shown embodiment and may be taken into account in a broader context as a delimiting feature, not only for the shown embodiment but as a common feature for all embodiments falling within the scope of the appended claims, in which:
fig. 1 shows a linear actuator according to the invention in a cross sectional view;
fig. 2 shows a piston and piston rod assembly of the linear actuator is shown in fig. 1 in further detail;
fig. 3A and 3B show successive steps of a method for manufacturing the piston and piston rod assembly, wherein a rod end is friction welded to a piston;
fig. 3C shows an enlarged view of the friction welded piston and piston rod assembly, wherein the rod end includes a centring portion;
fig. 4 shows in a schematic view a vehicle comprising a cab tilting system including a linear actuator, a tilt cylinder, according to the invention;
fig. 5 shows a hydraulic scheme of the tilting system of fig. 4.

Identical reference signs are used in the drawings to indicate identical or functionally similar components.

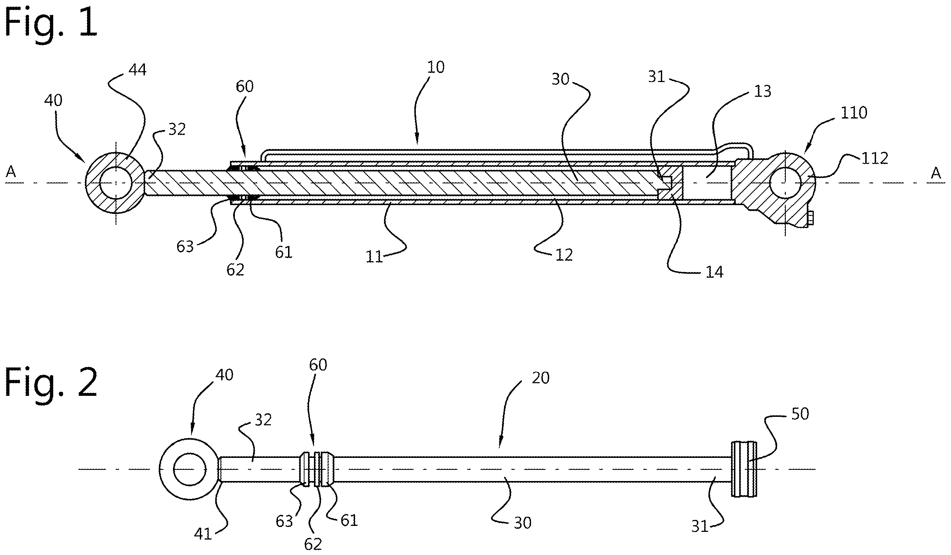

Fig. 1 shows a schematic cross-sectional view of a linear actuator 10 according to the invention. The linear actuator 10 is here embodied as a hydraulic actuator, in particular a hydraulic double acting actuator.

The linear actuator 10 has a cylinder housing 11 including a cylinder body 110 and a cylinder base 111. The cylinder base 111 is positioned at a proximal end of the cylinder body 110 and adapted to mount the linear actuator at a fixed position. The cylinder base 111 includes an eye connection 112 for pivotally mounting the linear actuator 10. The eye connection 112 is welded to the cylinder body 110.

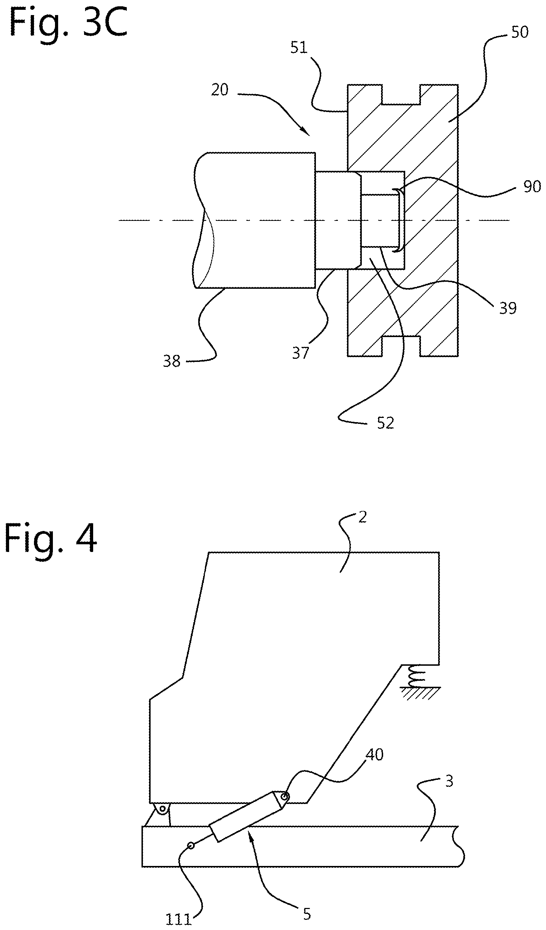

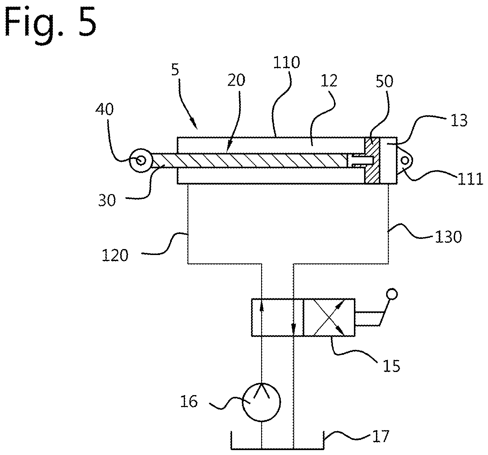

The cylinder body 110 defines an inner space. The inner space is subdivided into a pull chamber 12 and a push chamber 13. The pull and push chamber 12, 13 are defined by a movable piston 50. The piston 50 is connected to a piston rod 30. The piston rod 30 is elongated and defines an axial axis A-A. The piston rod 30 is a solid shaft. The piston rod 30 is massive. The piston rod 30 has a proximal rod end 31 and a distal rod end 32. The piston 50 is connected to the proximal rod end 31 of the piston rod 30. A rod head 40 is connected to the distal rod end 32 of the piston rod 30. Here, the rod head 40 includes an eye connection 44 for pivotally mounting the linear actuator 10 to an operable component. The eye connection 44 is welded to the distal rod end 32. The welded connections of the cylinder base 111 and the rod head 40 make the linear actuator suitable to be applied under heavy duty circumstances, e.g. in a tilting system of a vehicle, see fig. 4 and 5.

Further, the linear actuator comprises a seal assembly 60 for sealing the cylinder housing 11 with respect to the piston rod 30. The seal assembly 60 is positioned as a distal end of the cylinder body 110. The seal assembly 60 circumvents the piston rod 30. Typically, the seal assembly 60 comprises a subassembly of a gland 61, a seal ring 62 and a wiper 63.

According to the invention, the piston 50 is welded by friction welding to the piston rod 30. The welded assembly of the piston 50 and the piston rod 30 form a piston and piston rod assembly 20 which is further illustrated in fig. 2. The piston 50 is welded by friction welding to a proximal rod end 31 of the piston rod 30. The seal assembly is 60 is slidably mounted along the piston rod 30. A rod head 40 is connected to the distal rod end 32 of the piston rod 30. The rod head 40 may be screwed to the piston rod 30, but preferably, the rod head 40 is welded, in particular by friction welding, to the piston rod 30.

In a preferred embodiment of the method according to the invention for manufacturing the piston and piston rod assembly 20, a first step is carried out to weld the rod head 42 the distal rod end 32 of the piston rod 30. Subsequently, if necessary, a step of removing any weld particulars, e.g. weld bead residues at the rod head 42 may be carried out before proceeding to a next step. In a next step, the seal assembly 60 is slidably mounted around the piston rod 30. Subsequently, after mounting the seal assembly 60, the piston 50 is friction welded to the proximal rod end 31 of the piston rod 30. The step of friction welding is carried out by advantageously using a particular configuration of the proximal rod end 31 and the piston 50 to prevent contaminations or damages to the seal assembly 60 which is already mounted around the piston rod 30.

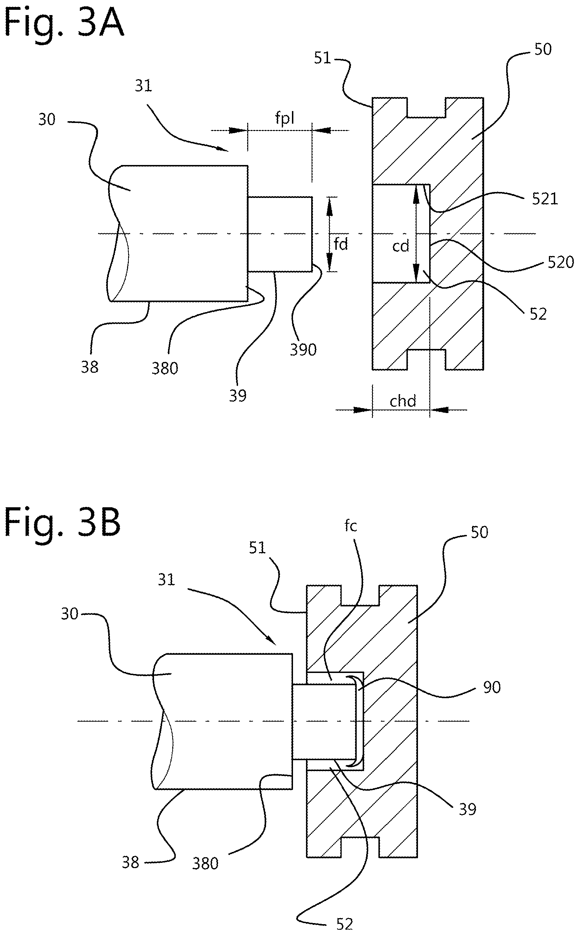

Embodiments of this particular configuration are illustrated in fig. 3A-3C.

Fig. 3A and 3B show the proximal rod end 31 of the piston rod 30 in cross sectional views, which views represent successive steps of friction welding the piston 50 to the rod end 31 of the piston rod 30.

Fig. 3A shows the piston rod 30 and the piston 50 as separate items before friction welding.

The piston rod 30 has a narrowed portion 39 at the proximal end 31. The piston rod 30 has a main rod diameter 38 along its length. Preferably, the piston rod 30 has a constant rod diameter along its length. Preferably, the piston rod 30 has a rod diameter 38 at the proximal end 31 of at most 20 mm. The narrowed portion 39 has a reduced diameter with respect to the rod diameter 38. And annular surface 380 in between the narrowed portion 39 and the remaining portion of the piston rod 30 delimits the narrowed portion 39.

The narrowed portion 39 is called a flash portion. The flash portion of 39 serves to carry out a friction welding operation. The flash portion 39 has an end face which serves as a flash surface 390. The flash surface is a surface in contact during a friction welding operation. The flash surface 390 is an end surface of the piston rod 30. Here, the piston rod 30 is solid and the flash surface 390 is circular. Alternatively, the flash portion 39 may be recessed or hollow and the flash surface 390 may be annular. The flash portion 39 has a flash portion length 'fpl' and a flash diameter 'fd'.

Fig. 3A further shows the piston 50. The piston 50 has a piston end face 51. The piston end face 51 has a recess at a central position. The recess forms a flash chamber 52 for receiving a flash portion. The flash chamber 52 has a chamber bottom 520 and a chamber wall 521.The flash chamber 52 has a chamber diameter 'cd' and a chamber depth 'chd'.

Fig. 3B shows the piston rod 30 and piston 50 being in contact after or during a friction welding operation. A gap may remain in between the piston end face 51 and the annular surface 380 after the friction welding operation. A weld bead, also called a flash bead 90, is formed around the joint area in between the rod main body 30 and the piston 50. The flash bead 90 is enclosed by the flash chamber 52. The flash bead 90 remains inside the flash chamber 52. Advantageously, the flash bead 90 is enclosed by the flash chamber 52 contributes in preventing a contamination of surroundings.

The flash diameter 'fd 'and the chamber diameter 'cd' are adapted to each other, such that the flash portion 39 of the piston rod 30 is insertable into the flash chamber 52. In particular, the flash diameter 'fd' is at least 1 mm smaller than the chamber diameter 'cd'. Inserting the flash portion 39 into the flash chamber 52 results in a flash clearance 'fc' in between the flash portion 39 and the chamber wall 521 of at least 1 mm. The flash clearance 'fc' is configured to receive the flash bead 90.

The flash portion has a flash portion length 'fpl' and the flash chamber has a flash chamber depth 'chd' which are adapted to each other. The flash portion length 'fpl' is larger than the flash chamber depth 'chd'. In particular, the flash portion length 'fpl' is at least 1 mm larger than the flash chamber depth 'chd', such that during friction welding a layer of material is discharged from the flash surface 390 and/or chamber bottom of at least 1 mm before the piston end face 51 contacts the annular surface 380 of the piston rod 30. Herewith, a required strong joint area may be obtained by the weld. A certain volume of material will be produced to obtain a friction weld bead 90. This friction weld bead 90 is enclosed by the flash chamber 52. When the piston 50 closely approaches or even contacts the annular surface 380, the flash chamber 52 may be substantially or even fully closed which contributes to a strong reduction of released welding residues.

Fig. 3C shows in a cross sectional view a further embodiment of the piston and piston rod assembly 20. The piston rod 30 is provided with a centring portion 37. The centring portion 37 is positioned aside, in particular adjacent, the flash portion 39. The centring portion 37 is adapted to centre the piston 50 with respect to the piston rod 30. During a step of friction welding, the piston rod 30 moves axially towards the piston 50. The flash portion 39 of the piston rod 30 is received into the flash chamber 52 of the piston 50. During friction welding, the centring portion 37 is also received into the flash chamber 52. An outer diameter of the centring portion 37 corresponds with an inner diameter of the flash chamber 52, such that the piston 50 centres with respect to the piston rod 30 when the centring portion 37 enters into the flash chamber 52. Besides centring the piston, the centring portion is further advantageous in that the flash chamber may remain fully closed during friction welding. This may eliminate any release of welding residuals and may prevent any contamination of surroundings.

In particular, the invention relates to the field of automotive technology. The linear actuator 10 according to the invention provides a beneficial contribution in a heavy duty environment. The linear actuator 10 is preferably embodied as a hydraulic cylinder provided with a welded rod head 40.

Fig. 4 shows a vehicle 1 comprising a tiltable cabin, a so-called tilt cab 2, arranged on a chassis 3. The vehicle is provided with a tilting system 4 for tilting the tilt cab 2 from a lowered position to a raised position with respect to the chassis 3. The tilting system 4 comprises a pivot axis and a tilt cylinder 5. According to the invention, the tilt cylinder 5 is configured as shown in figures 1-3. The tilt cylinder 5 is a double acting hydraulic cylinder. The tilt cylinder 5 comprises the cylinder housing 11, in which the cylinder base 111 is pivotally connected to the chassis 3 and in which the rod head 40 is connected to the cabin 2.

Fig. 5 schematically shows the tilting system 4 in further detail. The tilting system 4 comprises a double acting cylinder 5. The double acting cylinder 5 comprises a cylinder body 110 in which a pull chamber 12 and a push chamber 13 are defined by a movable piston 50. The piston 50 is fixed by friction welding to the piston rod 30 which together form a piston and piston rod assembly 20. The pull and push chamber 12, 13 are fluidly connected by respectively hydraulic lines 120, 130 to a control valve 15, a pump 16 and a reservoir 17 to extend or retract the piston and piston rod assembly 20. Here, the control valve 15 is a two position valve to switch between a pressurising or releasing operational step.

Thus, the invention provides a piston and piston rod assembly for a linear actuator which is manufactured by a friction welding method. The piston rod comprises a flash portion formed by a narrowed portion with a flash surface formed by an end face. The piston comprises a flash chamber formed by a centrally positioned recess. In the friction welding method the flash portion is inserted into the flash chamber and a relative rotation and an axial pressure in between the piston rod and the piston is carried out such that the flash surface joins to the chamber bottom. Advantageously, a clean welding step is provided which step allows a prior placement of a seal assembly around the piston rod. The seal assembly including a wiper, seal ring and a gland can be placed around the piston rod before the clean welding step is carried out.

**Reference signs list:**

| | |
|---|---|
| 1 vehicle | 112 eye connection |
| 2 tilt cab | 12 pull chamber |
| 3 chassis | 120 hydraulic line |
| 4 tilting system | 13 push chamber |
| 5 tilt cylinder | 130 hydraulic line |
| | 15 control valve |
| 10 linear actuator | 16 pump |
| 11 cylinder housing | 17 reservoir |
| 110 cylinder body | |
| 111 cylinder base | 20 piston and piston rod assembly |
| 30 | piston rod |
| 31 | proximal rod end |
| 32 | distal rod end |
| 37 | centring portion |
| 38 | rod diameter |
| 380 | annular surface |
| 39 | flash portion |
| 390 | flash surface |
| fpl | flash portion length |
| fd | flash diameter |
| | |
| 40 | rod head |
| 41 | rod head end face |
| 44 | eye connection |
| | |
| 50 | piston |
| 51 | piston end face |
| 52 | piston recess; flash chamber |
| 520 | chamber bottom |
| 521 | chamber wall |
| cd | chamber diameter |
| chd | chamber depth |
| | |
| 60 | seal assembly |
| 61 | gland |
| 62 | seal ring |
| 63 | wiper |
| | |
| 90 | flash bead |
| fc | flash clearance |

## Claims

1. Method for manufacturing a piston and piston rod assembly (20), wherein the method comprises a step of connecting the piston to the piston rod, wherein
- the piston rod is an elongated piston rod (30) which defines an axial axis and which piston rod (30) has a proximal rod end (31) and a distal rod end (32), wherein the piston rod (30) comprises a flash portion (39) which is formed by a narrowed portion at the proximal rod end (31) and a flash surface (390) formed by an end face at the proximal rod end (31) of the piston rod (30); and **characterised in that**
- the piston (50) comprises a flash chamber (52) which is formed by a centrally positioned recess in an end face (51) of the piston (50), wherein said recess has a recess bottom forming a chamber bottom (520) and a recess inner circumferential wall forming a chamber wall (521);
wherein the method comprises at least the steps of:
- inserting the flash portion (39) of the piston rod (30) into the flash chamber (52) of the piston (50), such that the flash surface (390) contacts the chamber bottom (520); and
- friction welding the piston rod (30) to the piston (50) by causing a relative rotation and an axial pressure in between the flash surface (390) of the piston rod (30) and the chamber bottom (520) of the piston (50) such that the flash surface (390) joins to the chamber bottom (520).

2. Method according to claim 1, wherein the method further comprises prior steps of:
- fixating a rod head (40) to the distal rod end (32) of the piston rod (30); and
- placing at least one seal assembly (60), in particular a subassembly of a wiper (63), seal ring (62) and a gland (61), around the piston rod (30)
wherein the following steps are carried out in succession after said prior steps:
- inserting the flash portion (39) into the flash chamber (52), such that the flash surface (390) contacts the chamber bottom (520); and
- friction welding the piston rod (30) to the piston (50) by exerting a relative rotation and an axial pressure between the piston rod (30) and the piston (50) such that the flash surface (390) joins to the chamber bottom (520).

3. Method according to claim 2, wherein during the step of friction welding the piston (50) is rotated relative to the piston rod (30) while the piston rod (30) is kept stationary.

4. Method according to claim 2 or 3, wherein the rod head (40) is fixated to the distal rod end (32) by welding, in particular by friction welding.

5. Method according to any of the preceding claims, wherein the piston rod (30) comprises a centring portion (37) positioned aside the flash portion (39) to centre the piston (50) with respect to the piston rod (30).

6. Piston and piston rod assembly (20) for a linear actuator (10) wherein the piston is connected by friction welding to the piston rod, wherein the piston and piston rod assembly comprises:
- an elongated piston rod (30) having a proximal rod end (31) and a distal rod end (32), wherein the piston rod (30) comprises a flash portion (39) at the proximal rod end (31) which flash portion (39) is formed by a narrowed portion and which flash portion (39) has a flash surface (390) formed by an end face of the piston rod (30),
- a piston (50) for subdividing an inner space of a cylinder housing (11) of the linear actuator (10) into a pull and push chamber (12, 13), **characterised in that** the piston (50) comprises a flash chamber (52) which is formed by a centrally positioned recess at an end face (51) of the piston (50), wherein said recess has a recess bottom forming a chamber bottom (520) and a recess inner circumferential wall forming a chamber wall (521),
wherein the flash chamber (52) is adapted to receive the flash portion (39) of the piston rod (30), such that the flash surface (390) abuts to the chamber bottom (520), the piston being connected by friction welding to the piston rod by causing a relative rotation and an axial pressure between the flash surface (390) of the piston rod and the chamber bottom (520) of the piston such that the flash surface (390) joins to the chamber bottom (520).

7. Piston and piston rod assembly (20) according to claim 6, wherein the flash portion (39) has a flash portion length (*fpl*) and wherein the flash chamber (52) has a flash chamber depth (*chd*) which flash portion length is at most 2mm larger than the chamber depth.

8. Piston and piston rod assembly (20) according to claim 6 or 7, wherein the piston rod (30) comprises a centring portion (37) for centring the piston (50) with respect to the piston rod (30), wherein the centring portion (37) is positioned aside, in particular adjacent, the flash portion (39).

9. Piston and piston rod assembly (20) according to any of the claims 6-8, wherein the piston (50) is made of a steel material.

10. Piston and piston rod assembly (20) according to any of the claims 6-9, further comprising:
- a rod head (40) welded at the distal rod end (32) of the piston rod (30) adapted to mount the piston and piston rod assembly (20) to an operable component;
- a seal assembly (60) slidably mounted around the piston rod (30).

11. Linear actuator (10), in particular a hydraulic linear actuator, wherein the linear actuator (10) comprises a cylinder housing (11) and a piston and piston rod assembly (20) according to any of the claims 6-10.

12. Cab tilting system (4) comprising a tilt cylinder (5) formed by a hydraulic linear actuator according to claim 11, further comprising an assembly of a pump (16), a reservoir (17) and a control valve (15) adapted to operate the tilt cylinder (5) for raising a cabin of a vehicle (1) with respect to a chassis (3).

13. Vehicle (1) comprising a cab tilting system (4) according to claim 12.

## Patentansprüche

1. Verfahren zur Herstellung einer Kolben- und Kolbenstangen-Baugruppe (20), wobei das Verfahren einen Schritt des Verbindens des Kolbens mit der Kolbenstange umfasst, wobei
- die Kolbenstange eine längliche Kolbenstange (30) ist, die eine axiale Achse definiert, wobei die Kolbenstange (30) ein proximales Stangenende (31) und ein distales Stangenende (32) aufweist, wobei die Kolbenstange (30) einen Abbrennabschnitt (39) umfasst, der durch einen verengten Abschnitt an dem proximalen Stangenende (31) gebildet ist, und eine Abbrennfläche (390) umfasst, die durch eine Endfläche an dem proximalen Stangenende (31) der Kolbenstange (30) gebildet ist; und **dadurch gekennzeichnet, dass**
- der Kolben (50) eine Abbrennkammer (52) umfasst, die durch eine mittig positionierte Ausnehmung in einer Endfläche (51) des Kolbens (50) gebildet ist, wobei die Ausnehmung einen Ausnehmungsboden aufweist, der einen Kammerboden (520) bildet, und eine Ausnehmungs-Innenumfangswand aufweist, die eine Kammerwand (521) bildet;
wobei das Verfahren mindestens die folgenden Schritte umfasst:
- Einführen des Abbrennabschnitts (39) der Kolbenstange (30) in die Abbrennkammer (52) des Kolbens (50), dergestalt, dass die Abbrennfläche (390) den Kammerboden (520) kontaktiert; und
- Reibschweißen der Kolbenstange (30) an den Kolben (50) durch Herbeiführen einer relativen Drehung und eines axialen Drucks zwischen der Abbrennfläche (390) der Kolbenstange (30) und dem Kammerboden (520) des Kolbens (50), dergestalt, dass die Abbrennfläche (390) mit dem Kammerboden (520) verbunden wird.

2. Verfahren nach Anspruch 1, wobei das Verfahren des Weiteren die folgenden vorherigen Schritte umfasst:
- Befestigen eines Stangenkopfes (40) an dem distalen Stangenende (32) der Kolbenstange (30); und
- Anordnen mindestens einer Dichtungsbaugruppe (60), insbesondere einer Unterbaugruppe aus einem Abstreifer (63), einem Dichtungsring (62) und einer Stopfbuchse (61), um die Kolbenstange (30),
wobei die folgenden Schritte nacheinander nach den vorherigen Schritten ausgeführt werden:
- Einsetzen des Abbrennabschnitts (39) in die Abbrennkammer (52), dergestalt, dass die Abbrennfläche (390) den Kammerboden (520) kontaktiert; und
- Reibschweißen der Kolbenstange (30) an den Kolben (50) durch Ausüben einer relativen Drehung und eines axialen Drucks zwischen der Kolbenstange (30) und dem Kolben (50), dergestalt, dass die Abbrennfläche (390) mit dem Kammerboden (520) verbunden wird.

3. Verfahren nach Anspruch 2, wobei während des Schrittes des Reibschweißens der Kolben (50) relativ zu der Kolbenstange (30) gedreht wird, während die Kolbenstange (30) ortsfest gehalten wird.

4. Verfahren nach Anspruch 2 oder 3, wobei der Stabkopf (40) durch Schweißen, insbesondere durch Reibschweißen, an dem distalen Stabende (32) befestigt wird.

5. Verfahren nach einem der vorangehenden Ansprüche, wobei die Kolbenstange (30) einen Zentrierabschnitt (37) umfasst, der neben dem Abbrennabschnitt (39) angeordnet ist, um den Kolben (50) in Bezug auf die Kolbenstange (30) zu zentrieren.

6. Kolben- und Kolbenstangen-Baugruppe (20) für einen Linearaktuator (10), wobei der Kolben durch Reibschweißen mit der Kolbenstange verbunden ist, wobei die Kolben- und Kolbenstangen-Baugruppe Folgendes umfasst:
- eine längliche Kolbenstange (30), die ein proximales Stangenende (31) und ein distales Stangenende (32) aufweist, wobei die Kolbenstange (30) einen Abbrennabschnitt (39) an dem proximalen Stangenende (31) umfasst, wobei der Abbrennabschnitt (39) durch einen verengten Abschnitt gebildet ist, und wobei der Abbrennabschnitt (39) eine Abbrennfläche (390) aufweist, die durch eine Endfläche der Kolbenstange (30) gebildet ist,
- einen Kolben (50) zum Unterteilen eines Innenraums eines Zylindergehäuses (11) des Linearaktuators (10) in eine Zug- und eine Druckkammer (12, 13), **dadurch gekennzeichnet, dass**
der Kolben (50) eine Abbrennkammer (52) umfasst, die durch eine mittig angeordnete Ausnehmung an einer Endfläche (51) des Kolbens (50) gebildet ist, wobei diese Ausnehmung einen Ausnehmungsboden aufweist, der einen Kammerboden (520) bildet, und eine Ausnehmungs-Innenumfangswand aufweist, die eine Kammerwand (521) bildet,
wobei die Abbrennkammer (52) dafür geeignet ist, den Abbrennabschnitt (39) der Kolbenstange (30) aufzunehmen, dergestalt, dass die Abbrennfläche (390) an dem Kammerboden (520) anliegt, wobei der Kolben durch Reibschweißen mit der Kolbenstange verbunden wird, indem eine relative Drehung und ein axialer Druck zwischen der Abbrennfläche (390) der Kolbenstange und dem Kammerboden (520) des Kolbens herbeigeführt wird, dergestalt, dass die Abbrennfläche (390) mit dem Kammerboden (520) verbunden wird.

7. Kolben- und Kolbenstangen-Baugruppe (20) nach Anspruch 6, wobei der Abbrennabschnitt (39) eine Abbrennabschnittslänge (*fpl*) aufweist und wobei die Abbrennkammer (52) eine Abbrennkammertiefe (*chd*) aufweist, wobei die Abbrennabschnittslänge höchstens 2 mm größer als die Kammertiefe ist.

8. Kolben- und Kolbenstangen-Baugruppe (20) nach Anspruch 6 oder 7, wobei die Kolbenstange (30) einen Zentrierabschnitt (37) zum Zentrieren des Kolbens (50) in Bezug auf die Kolbenstange (30) umfasst, wobei der Zentrierabschnitt (37) seitlich des Abbrennabschnitts (39), insbesondere angrenzend an den Abbrennabschnitt (39), positioniert ist.

9. Kolben- und Kolbenstangen-Baugruppe (20) nach einem der Ansprüche 6-8, wobei der Kolben (50) aus einem Stahlmaterial besteht.

10. Kolben- und Kolbenstangen-Baugruppe (20) nach einem der Ansprüche 6 bis 9, die des Weiteren Folgendes umfasst:
- einen Stangenkopf (40), der an das distale Stangenende (32) der Kolbenstange (30) geschweißt ist, um die Kolben- und Kolbenstangen-Baugruppe (20) an einer Betätigungskomponente zu montieren;
- eine Dichtungsbaugruppe (60), die gleitfähig um die Kolbenstange (30) herum montiert ist.

11. Linearaktuator (10), insbesondere hydraulischer Linearaktuator, wobei der Linearaktuator (10) ein Zylindergehäuse (11) und eine Kolben- und Kolbenstangen-Baugruppe (20) nach einem der Ansprüche 6-10 umfasst.

12. Fahrerhauskippsystem (4), das einen Kippzylinder (5) umfasst, der durch einen hydraulischen Linearaktuator nach Anspruch 11 gebildet ist, und des Weiteren eine Baugruppe aus einer Pumpe (16), einem Vorratsbehälter (17) und einem Steuerventil (15) umfasst, die dafür geeignet ist, den Kippzylinder (5) zum Anheben eines Fahrerhauses eines Fahrzeugs (1) mit Bezug auf ein Fahrgestell (3) zu betätigen.

13. Fahrzeug (1), das ein Fahrerhauskippsystem (4) nach Anspruch 12 umfasst.

## Revendications

1. Procédé de fabrication d'un ensemble piston et tige de piston (20), dans lequel le procédé comprend une étape de connexion du piston à la tige de piston, dans lequel
- la tige de piston est une tige de piston (30) allongée qui définit un axe axial et laquelle tige de piston (30) a une extrémité de tige proximale (31) et une extrémité de tige distale (32), dans laquelle la tige de piston (30) comprend une partie bavure (39) qui est formée par une partie rétrécie au niveau de l'extrémité de tige proximale (31) et une surface de bavure (390) formée par une face d'extrémité au niveau de l'extrémité de tige proximale (31) de la tige de piston (30) ; et **caractérisé en ce que**
- le piston (50) comprend une réserve d'ébavurage (52) qui est formée par un évidement positionné de manière centrale dans une face d'extrémité (51) du piston (50), dans lequel ledit évidement a un fond d'évidement formant un fond de réserve (520) et une paroi circonférentielle intérieure d'évidement formant une paroi de réserve (521) ;
dans lequel le procédé comprend au moins les étapes consistant à :
- insérer la partie bavure (39) de la tige de piston (30) dans la réserve d'ébavurage (52) du piston (50), de sorte que la surface de bavure (390) entre en contact avec le fond de réserve (520) ; et
- souder par friction la tige de piston (30) sur le piston (50) en provoquant une rotation relative et une pression axiale entre la surface de bavure (390) de la tige de piston (30) et le fond de réserve (520) du piston (50) de sorte que la surface de bavure (390) rejoigne le fond de réserve (520).

2. Procédé selon la revendication 1, dans lequel le procédé comprend en outre les étapes préalables suivantes :
- fixer une tête de tige (40) à l'extrémité distale (32) de la tige de piston (30) ; et
- placer au moins un ensemble de joint (60), notamment un sous-ensemble composé d'un racleur (63), d'une bague d'étanchéité (62) et d'un fouloir (61), autour de la tige de piston (30)
dans lequel les étapes suivantes sont exécutées successivement après lesdites étapes précédentes :
- insérer la partie bavure (39) dans la réserve d'ébavurage (52), de telle sorte que la surface de bavure (390) soit en contact avec le fond de réserve (520) ; et
- souder par friction la tige de piston (30) au piston (50) en exerçant une rotation relative et une pression axiale entre la tige de piston (30) et le piston (50) de sorte que la surface de bavure (390) rejoigne le fond de réserve (520).

3. Procédé selon la revendication 2, dans lequel, pendant l'étape de soudage par friction, le piston (50) est mis en rotation par rapport à la tige de piston (30) tandis que la tige de piston (30) est maintenue fixe.

4. Procédé selon la revendication 2 ou 3, dans lequel la tête de tige (40) est fixée à l'extrémité distale de la tige (32) par soudage, notamment par soudage par friction.

5. Procédé selon l'une quelconque des revendications précédentes, dans lequel la tige de piston (30) comprend une partie de centrage (37) positionnée à côté de la partie bavure (39) pour centrer le piston (50) par rapport à la tige de piston (30).

6. Ensemble piston et tige de piston (20) pour un actionneur linéaire (10) dans lequel le piston est relié par soudage par friction à la tige de piston, dans lequel l'ensemble piston et tige de piston comprend :
- une tige de piston (30) allongée ayant une extrémité de tige proximale (31) et une extrémité de tige distale (32), dans laquelle la tige de piston (30) comprend une partie bavure (39) à l'extrémité de tige proximale (31), laquelle partie bavure (39) est formée par une partie rétrécie et laquelle partie bavure (39) a une surface de bavure (390) formée par une face d'extrémité de la tige de piston (30),
- un piston (50) pour subdiviser un espace intérieur d'un logement de cylindre (11) de l'actionneur linéaire (10) en une chambre de traction et de poussée (12, 13), **caractérisé en ce que** le piston (50) comprend une réserve d'ébavurage (52) qui est formée par un évidement positionné de manière centrale au niveau d'une face d'extrémité (51) du piston (50), dans lequel ledit évidement a un fond d'évidement formant un fond de réserve (520) et une paroi circonférentielle intérieure d'évidement formant une paroi de réserve (521) ;
dans lequel la réserve d'ébavurage (52) est adaptée pour recevoir la partie bavure (39) de la tige de piston (30), de sorte que la surface de bavure (390) bute contre le fond de réserve (520), le piston étant relié par soudage par friction à la tige de piston en provoquant une rotation relative et une pression axiale entre la surface de bavure (390) de la tige de piston et le fond de réserve (520) du piston de sorte que la surface de bavure (390) rejoigne le fond de réserve (520) .

7. Ensemble piston et tige de piston (20) selon la revendication 6, dans lequel la partie de bavure (39) a une longueur de partie de bavure (*fpl*) et dans lequel la réserve d'ébavurage (52) a une profondeur de réserve d'ébavurage (*chd*), laquelle longueur de partie de bavure est au plus 2 mm plus grande que la profondeur de réserve.

8. Ensemble piston et tige de piston (20) selon la revendication 6 ou 7, dans lequel la tige de piston (30) comprend une partie de centrage (37) pour centrer le piston (50) par rapport à la tige de piston (30), dans lequel la partie de centrage (37) est positionnée à côté, en particulier adjacente, à la partie de bavure (39).

9. Ensemble piston et tige de piston (20) selon l'une quelconque des revendications 6 à 8, dans lequel le piston (50) est réalisé dans un matériau en acier.

10. Ensemble piston et tige de piston (20) selon l'une quelconque des revendications 6 à 9, comprenant en outre :
- une tête de tige (40) soudée à l'extrémité distale (32) de la tige de piston (30) adaptée pour monter l'ensemble piston et tige de piston (20) sur un composant utilisable ;
- un ensemble de joint (60) monté de manière coulissante autour de la tige de piston (30).

11. Actionneur linéaire (10), en particulier un actionneur linéaire hydraulique, dans lequel l'actionneur linéaire (10) comprend un boîtier de cylindre (11) et un ensemble piston et tige de piston (20) selon l'une quelconque des revendications 6 à 10.

12. Système de basculement de cabine (4) comprenant un vérin d'inclinaison (5) formé par un actionneur linéaire hydraulique selon la revendication 11 , comprenant en outre un ensemble d'une pompe (16), d'un réservoir (17) et d'une vanne de commande (15) adapté pour actionner le vérin d'inclinaison (5) afin de relever une cabine d'un véhicule (1) par rapport à un châssis (3).

13. Véhicule (1) comprenant un système de basculement de cabine (4) selon la revendication 12.
